# EUROPÄISCHE PATENTSCHRIFT

(11) **EP 3 513 039 B1**
(45) Veröffentlichungstag und Bekanntmachung des Hinweises auf die Patenterteilung: **29.05.2024**
(21) Anmeldenummer: 17764401.0
(22) Anmeldetag: 08.09.2017
(51) Int. Cl.: E21D 9/00

(54) **MESSSIGNALAUSWERTUNGSVERFAHREN**
MEASUREMENT SIGNAL EVALUATION METHOD
PROCÉDÉ D'ÉVALUATION DE SIGNAUX DE MESURE

(30) Priorität: 15.09.2016 CH 12012016
(43) Veröffentlichungstag der Anmeldung: 24.07.2019
(73) Patentinhaber: Jackcontrol AG, 8750 Glarus (CH)
(72) Erfinder: TRÜMPI-ALTHAUS, Stefan, 8762 Schwändi (CH); FERNDIGER, Peter, 8750 Glarus (CH)
(74) Vertreter: Keller Schneider Patent- und Markenanwälte AG
(86) Internationale Anmeldenummer: PCT/EP2017/072605
(87) Internationale Veröffentlichungsnummer: WO 2018/050556

(56) Entgegenhaltungen:
- EP-A1- 1 727 964
- JP-A- 2005 213 743
- ROHNER R ET AL: "Calculation of jacking force by new ATV A-161", TUNNELLING AND UNDERGROUND SPACE TECHNOLOGY, ELSEVIER SCIENCE PUBLISHING, NEW YORK,NY, US, Bd. 25, Nr. 6, 30. Dezember 2009 (2009-12-30), Seiten 731-735, XP027235856, ISSN: 0886-7798 [gefunden am 2010-08-25]

## Beschreibung

### Technisches Gebiet

Die Erfindung betrifft ein Messsignalauswertungsverfahren für ein Rohrvortriebsverfahren im Untergrund zum gleichzeitigen Vorschieben von mindestens zwei Rohrelementen, welche eine vorgegebene statische Belastungsgrenze haben, wobei das Verfahren zum Erstellen einer Rohrleitung entlang einer Planungslinie vorgesehen ist, wobei die Messsignalauswertung die Schritte umfasst: messen eines Richtungswinkels des Rohrvortriebs mit einem Winl<elsensore; ausgeben des gemessenen Richtungswinkels.

### Stand der Technik

Das klassische Verlegen von Rohrleitungen erfolgt in Gräben, wo sie Stück für Stück in ein Bett eingelegt, abgedichtet und wieder eingedeckt werden.

In einem überbauten, coupierten oder sonst wie im oberen Bereich schwierigen Gelände bietet sich als an sich bekannte Alternative an, aus einem abgeteuften Schacht einen Rohrstrang in das Erdreich zu treiben. Es wird ein möglichst gerade verlaufender Sollweg für den Rohrstrang projektiert, wobei allfällige Hindernisse in einem möglichst grossen I<urvenradius umgangen werden.

Der Rohrstrang wird durch sukzessives Anlegen von Rohrelementen in das Erdreich gepresst, wobei ein steuerbares Kopfstück den Weg weist. Die Rohrelemente werden in einen Pressschacht abgesenkt und mit einer Pressvorrichtung vorwärts getrieben, bis das nächste Rohrstück eingesetzt werden kann. Die Rohrelemente haben einen Durchmesser von bis zu mehreren Metern, ein Rohrstrang aus Rohrelementen von beispielsweise 1 bis 4 m Durchmesser kann eine Länge von 1 bis 2 I<m oder mehr erreichen.

In einem Zielschacht kann das Kopfstück des Rohrstrangs entnommen und die notwendigen Abschlussvorrichtungen und -leitungen zugefügt werden.

Mit zunehmender Vortriebslänge nehmen die erforderlichen Vorpressl<räfte infolge der Mantelreibung der Rohrelemente zu. Je nach der Länge des Rohrstrangs und der anzuwendenden Presskraft können Zwischenpressstationen oder Zwischenschächte für weitere Pressvorrichtungen erstellt werden, mit welchen die Reichweite entsprechend erhöht werden kann.

Das vom Förderkopf abgetragene Erdmaterial muss in Gegenrichtung zum meist etwa horizontalen Rohrvortrieb abgeführt werden, dies kann in an sich bekannter Weise mit Förderbändern, Schuttwagen oder dgl. erfolgen. Weiter ist bei entsprechendem Erdreich eine Dünnstromförderung in geschlossenen Rohren möglich.

Die hohen Vortriebskräfte müssen möglichst gleichmässig und ohne lokale Spannungskonzentrationen stirnseitig von Rohrelement zu Rohrelement übertragen werden, was im Direktkontakt nicht ohne Beschädigungen möglich wäre. Es ist bekannt, dem Rohrquerschnitt entsprechende Drucl<übertragungsringe in Form von hydraulischen Fugen einzulegen.

Beim Pressvortrieb werden die Rohrelemente sowohl in axialer als auch in radialer Richtung stark beansprucht. Die Vorpressl<räfte müssen den Brustwiderstand und die Reibung zwischen dem Rohrmantel und dem Erdreich überwinden. Richtungsl<orrel<turen führen, neben einer Zunahme der Vorpressl<räfte, vor allem zu einer ungleichförmigen Verteilung der Druckspannungen der Rohrstirnseiten und im Rohrelement selbst. Weitere Einwirkungen, wie z. B. Zwängungskräfte und Eigengewicht, beanspruchen die Rohre auch in radialer Richtung.

Bei der Rohrverlegung sollen die Rohrverlegungsl<urven möglichst grosse Kurvenradien aufweisen, so dass der Vorschub mit möglichst grosser Geschwindigkeit vorangetrieben werden kann. Anderseits sollen die Kurvenradien bei einer Richtungskorrektur möglichst klein gewählt werden, so dass nur geringe Umwege gefahren werden müssen. Die I<raftübertagung zwischen zwei Rohrelementen, welche nicht auf derselben Achse liegen, erfolgt bekanntermassen exzentrisch. Dabei ist der Fugenwinl<el bei der hydraulischen Fuge zwischen den beiden Rohrelementen proportional zur Fugenexzentrizität, womit auch eine Fugenwinl<eldifferenz proportional zu den Rohrexzentrizitäten ist.

Die EP 1 727 964 B1 beschreibt ein Verfahren zum Ermitteln der Vortriebskraft, deren Exzentrizität bezüglich der neutralen Achse und/oder der Vortriebsrichtung beim Vortrieb von Rohrelementen in einem weichen, steinigen und/oder felsigen Untergrund, wobei eine Pressvorrichtung und stirnseitig in den Fugen des Rohrstrangs angeordnete, fluidgefüllte Dehnelemente eingesetzt werden. Bei einer Überschreitung einer maximal zulässigen Vorschubkraft wird ein Alarm ausgelöst, so dass das Verfahren unterbrochen werden kann.

Das bekannte Verfahren hat den Nachteil, dass damit kein effizientes Verlegen von Rohrleitungen ermöglicht wird.

### Darstellung der Erfindung

Aufgabe der Erfindung ist es, eine dem eingangs genannten technischen Gebiet zugehörendes Verfahren zum Auswerten eines Messsignals zu schaffen, womit eine effiziente Verlegung von Rohrleitungen erreicht wird.

Die Lösung der Aufgabe ist durch die Merkmale des Anspruchs 1 definiert. Gemäss der Erfindung wird ein aktueller, vom Richtungswinkel abhängiger Maximalkraft-Differenzwinl<elbereich berechnet und ausgegeben, der zumindest aufgrund des aktuellen Richtungswinkels und der statischen Rohrbelastungsgrenze berechnet ist.

Unter dem **Maximalkraft-Differenzwinkelbereich** ist ein Bereich zu verstehen, in welchem ein Winkel der beiden vordersten Rohrelemente geändert werden kann, ohne dass eine Vorschubkraft reduziert werden müsste. Ausserhalb des Maximalkraft-Differenzwinl<elbereichs müsste eine I<raftredul<tion erfolgen, um eine Beschädigung der Rohrelemente aufgrund zu hoher Rohrexzentrizität zu vermeiden.

Falls zum Beispiel der Bohrkopf während des Bohrvorgangs von einer Ideallinie auf einem Planverlauf abweicht, kann der Anwender aufgrund des ermittelten Maximalkraft-Differenzwinl<elbereichs den Bohrkopf zurück auf den Planverlauf steuern, indem der Maximalkraft-Differenzwinkelbereich eingehalten wird. Damit kann ohne I<raftredul<tion und damit entsprechend effizient auf den Planverlauf zurück gefunden werden. Weiter kann damit die Rohrexzentrizität klein gehalten werden, womit die Belastungen der Rohrelemente und ein Beschädigungsrisiko derselben minimiert werden kann. Weiter kann damit eine Fugenklaffung, d.h. eine Fugenöffung, welche grösser ist als die Fuge, vermieden werden.

Ausbuchtungen aus dem Planverlauf haben in der Regel eine höhere Reibung zur Folge, womit die Vorschubsgeschwindigkeit sinken kann. Die Ausbuchtungen schleifen sich mit zunehmendem Rohrvorschub jedoch in der Regel wieder ab, so dass der Rohrstrang zurück auf den Planverlauf findet. Es ist dabei aber von Vorteil, wenn der Bohrkopf schnellstmöglich wieder auf den Planverlauf gelangt, so dass die abzuschleifende Ausbuchtung im Untergrund kieinstmögiich bleibt. Demgegenüber soll aber auf keinen Fall ein Rohrbruch oder auch nur eine Beschädigung eines Rohrelements riskiert werden. Das erfindungsgemässe Verfahren ermöglicht nun dem Anwender innerhalb des ermittelten Maximall<raft-Differenzwinl<elbereichs in optimaler und effizienter Weise bei Abweichungen vom Planverlauf zurück auf den Planverlauf zu finden.

Die **Winkelsensoren** umfassen vorzugsweise Wegsensoren oder Positionssensoren, welche am Bohrkopf angeordnet sind, um eine Orientierung des Bohrkopfs zum Bohrkörper zu ermitteln. In einer weiteren Ausführungsform sind alternativ oder zusätzlich im Übergang zwischen zwei Rohrelementen umfangseitig, insbesondere an der Innenseite, mehrere Wegsensoren oder Positionssensoren angeordnet, insbesondere zum Beispiel drei oder vier Wegsensoren oder Positionssensoren, welche in regelmässigem Winkelabstand verteilt sind, d.h. alle 120° bei drei respektive alle 90° bei vier Wegsensoren oder Positionssensoren. So kann eine Ausrichtung der beiden Rohrelemente zueinander bestimmt werden, indem umfangseitig die Fugengrösse bestimmt wird. Ein Winkelsensor kann zum Beispiel bei mehreren hydraulischen Fugen zwischen zwei Rohrelementen vorgesehen sein.

Die Winkelsensoren können aber auch anderweitig ausgebildet sein. Zum Beispiel können die Winkelsensoren auch über Druckmessgeräte an einer mehrteiligen hydraulischen Fuge oder über eine Verformung der hydraulischen Fugen erreicht werden. Gegebenenfalls kann die hydraulische Fuge mehrere I<reissegmente umfassen, wobei in diesem Fall auch innerhalb der hydraulischen Fugenelemente der Druck gemessen werden kann, um auf einen Winkel schliessen zu können.

Die durch die Winkelsensoren erzeugten Messdaten werden im Verfahren als Richtungswinkel des Bohrkopfs ausgegeben.

Unter der **statischen Belastungsgrenze** eines Rohrelements wird ein Druck verstanden, unter welchem das Rohr (noch) nicht beschädigt wird. Messverfahren zum Bestimmen einer statischen Belastungsgrenze sowie Verfahren zur Herstellung von Rohrelementen mit vorbestimmten statischen Belastungsgrenzen sind dem Fachmann hinreichend bekannt. Typischerweise wird die statische Belastungsgrenze durch die Dimensionen des Rohrelements, die Materialwahl und die Armierung bestimmt. Die Rohrelemente können beispielsweise aus Beton, Steinzeug, Stahlbeton, Gusseisen, Stahl oder Kunststoffen bestehen.

In einem Steuerverfahren für ein Rohrvortriebsverfahren wird ein Bohrkopf derart gesteuert, dass der Richtungswinkel innerhalb des Maximall<raft-Differenzwinl<elbereichs liegt.

Das Rohrvortriebsverfahren erfolgt damit unter Verwendung des Steuerverfahrens. In einer bevorzugten Ausführungsform läuft das Rohrvortriebsverfahren automatisch ab. Dazu umfasst die Vorrichtung vorzugsweise eine Regeleinrichtung zur Regelung eines Stellsignals des Bohrwinl<els anhand des Maximalkraft-Differenzwinkelbereichs. Vorzugsweise wird im Verfahren der Regler mit dem Maximall<raft-Differenzwinl<elbereich derart überlagert, dass eine Stellsignalbegrenzung innerhalb des Maximalkraft-Differenzwinl<elbereichs erreicht ist.

Vorzugsweise umfasst die Pressvortriebseinrichtung ein Ausgabemittel zur Darstellung des Maximall<raft-Differenzwinl<elbereichs, insbesondere einen Bildschirm. Vorzugsweise wird dazu der Maximall<raft-Differenzwinl<elbereich graphisch, insbesondere auf einem Bildschirm dargestellt. Dies erlaubt dem Anwender, insbesondere einem Bohrmeister, optisch festzustellen, ob sich der Bohrkopf in einem Winkelbereich befindet, in welchem noch mit der Maximalkraft Vorschub geleistet werden kann. Die Graphische Darstellung kann zum Beispiel ein Koordinatensystem sein, wobei auf den Koordinatenachsen ein Bohrl<opfwinl<elveränderung abgebildet ist. Der Nullpunkt des Koordinatensystems liegt vorzugweise auf der Exzentrizität der Vorschubkraft. Der Maximalkraft-Differenzwinl<elbereich kann als geschlossene Grenzkurve im Koordinatensystem dargestellt sein. Dem Fachmann ist jedoch klar, dass der Grenzbereich auch anderweitig dargestellt werden kann, zum Beispiel durch Farbverläufe oder dergleichen. Statt des Winkelbereichs kann auch ein Verschwenkweg in mm oder cm dargestellt sein. Die graphische Darstellung kann aber auch einfacher vorgesehen sein, so dass zum Beispiel jeweils mit grün/orange/rot ein optimaler, ein akzeptabler und ein nicht optimaler Bereich gekennzeichnet werden. Schliesslich kann der Maximall<raft-Differenzwinl<elbereich auch nummerisch dargestellt sein, indem zum Beispiel ein Prozentsatz des Grenzwinkels angegeben wird. Solche Angaben können zum Beispiel in vier Richtungen (seitlich, oben unten) vorgesehen sein. Dem Fachmann sind auch weitere Möglichkeiten zur Darstellung eines Maximall<raft-Differenzwinl<elbereichs bekannt.

Alternativ kann auf eine graphische Darstellung auch verzichtet werden, insbesondere wenn ein solches Verfahren zum Verlegen von Rohren automatisch erfolgt. Weiter kann der Maximall<raft-Differenzwinl<elbereich auch über einen Joystick haptisch, durch Vibration oder dergleichen wieder gegeben werden. Dem Fachmann sind auch dazu weitere Möglichkeiten bekannt.

Die Erfindung betrifft weiter ein Computerprogrammprodukt umfassend ein Computerprogramm zur Durchführung eines Messsignalauswertungsverfahrens. Das Computerprogramm verarbeitet dabei die mit Winkelsensoren gemessenen Richtungswinkel zu einem Maximall<raft-Differenzwinl<elbereich, welcher zumindest aufgrund des aktuellen Richtungswinkels und der statischen Rohrbelastungsgrenze berechnet ist.

Weiter umfasst die Erfindung eine Messeinrichtung umfassend einen Winkelsensor zum Messen eines Winkels eines Bohrkopfs gegenüber einem Maschinenkörper einer Bohrvorrichtung, sowie insbesondere einen Winkelsensor zum Messen eines Winkels zwischen zwei Rohrelementen, zum Ausgeben von Winkeldaten, eine Datenverarbeitungseinheit zum Verarbeiten der Winkeldaten sowie ein Computerprogramm zur Durchführung eines Messsignalauswertungsverfahrens.

Eine Pressvortriebseinrichtung zur Durchführung eines Messsignalauswertungsverfahren umfasst erfindungsgemäss eine Presse zum Vortreiben zweier Rohrelemente und einer Bohrvorrichtung (6) mit einem Bohrkopf (6.2) und einem Maschinenkörper (6.1), wobei ein Winkelsensor (7.1) zwischen dem Bohrkopf (6.2) und dem Maschinenkörper (6.1), wobei insbesondere zwischen den beiden Rohrelementen ein Winkelsensor angeordnet ist, sowie eine Datenverarbeitungseinheit zum Berechnen und Ausgeben eines aktuellen, vom Richtungswinkel abhängigen Maximall<raft-Differenzwinl<elbereichs, der zumindest aufgrund des aktuellen Richtungswinkels und der statischen Rohrbelastungsgrenze berechnet ist.

Vorzugsweise wird im Rohrvortriebsverfahren eine Interaktion zwischen dem Untergrund, der Bohrvorrichtung und der Presse ausgewertet. Diese Wechselwirkungen werden beeinflusst durch zum Beispiel die Bodenbeschaffenheit, Vorhandensein von Grundwasser, Rohrlänge, Kurvenradius. Damit können Rückschlüsse auf das Rohrvortriebsverfahren geschlossen werden, mittels welchen das Verfahren, insbesondere in Echtzeit, optimiert werden kann. Damit kann der Maximall<raft-Differenzwinl<elbereich, insbesondere in Echtzeit, der Bodenbeschaffenheit angepasst werden.

Die Erfindung betrifft weiterhin ein Messsignalauswertungsverfahren für ein Rohrvortriebsverfahren zum gleichzeitigen Vorschieben von mindestens zwei Rohrelementen, welche eine vorgegebene statische Belastungsgrenze haben. Das Rohrvortriebsverfahren ist zum Erstellen einer Rohrleitung entlang einer Planungslinie im Untergrund vorgesehen. Die Messsignalauswertung umfasst die Schritte: messen eines Richtungswinkels des Rohrvortriebs mit einem Winkelsensor, Ausgeben des gemessenen Richtungswinkels und Bestimmen mindestens einer Eigenschaft des Untergrunds, insbesondere eines Austrages, sowie Berechnen und Ausgeben eines Driftwinkels zwischen der Planungslinie und dem Bohrkopf in Abhängigkeit des aktuellen Richtungswinkels und der aktuellen Eigenschaft des Untergrunds, zum Einhalten der Planungslinie während des Rohrvortriebsverfahrens. Zwischen den Rohrelementen ist vorzugsweise eine hydraulische Fuge mit Winkelsensoren angeordnet.

Der Bohrkopf weist eine relativ grosse Dichte auf. Sofern der Untergrund eine zu geringe Festigkeit aufweist, besteht die Gefahr, dass der Bohrkopf vertikal nach unten abdriftet. Diesen Drift kann bei konstanter Bodenbeschaffenheit mit einem Gegenwinkel respektive einem Driftwinkel aufgenommen werden.

Mit diesem Verfahren kann die Ausrichtung des Bohrkopfs in der vertikalen Ebene optimiert werden. Anhand des Austrages können Rückschlüsse auf die Bodenbeschaffenheit gezogen werden. Die Eigenschaft des Austrages kann zum Beispiel eine Dichte, eine Materialzusammensetzung, ein Wassergehalt und dergleichen sein. Dem Fachmann ist klar, dass auch mehr als eine Eigenschaft des Austrages berücksichtigt werden kann. Anhand des Austrages können Rückschlüsse auf den Maximalkraft-Winkelbereich gezogen werden.

Falls aufgrund des Austrages von einem losen Untergrund auszugehen ist, kann nun der Bohrkopf mit einem Driftwinkel versehen werden, welcher zum Beispiel in geringem Masse entgegen einer Schwerkraftrichtung gerichtet ist, um ein Absenken zu vermeiden. Das heisst, der Bohrkopf verfährt nach wie vor horizontal, obschon er in geringem Masse vertikal nach oben verschwenkt ist.

Vorzugsweise wird der Richtungswinkel des Bohrkopfs (6.2) gegenüber einem Maschinenkörper (6.1) einer Bohrvorrichtung (6), sowie insbesondere bei der hydraulischen Fuge zwischen einem in einer Vorschubrichtung ersten und zweiten Rohrelement gemessen. Während eines Rohrvorschubverfahrens werden fortlaufend hintereinander Rohre typischerweise mit einer hydraulischen Presse nachgeschoben. Mit dem Bohrkopf wird die Richtung bestimmt. Durch Inhomogenitäten in der Bodenbeschaffenheit oder aufgrund von Hindernissen wie Findlinge etc. kann die Bohrrichtung von der Solllinie respektive Planungslinie abweichen. Diese Abweichungen werden fortlaufend durch geeignetes Steuern des Bohrkopfs korrigiert. Die damit erzeugten Wellenlinien um die Planungslinie werden typischerweise relativ schnell durch den Vorschub der nächsten Rohrelemente abgeschliffen, so dass sich die Rohrleitung automatisch ausrichtet. Dies hat aber auch zur Folge, dass typischerweise die wesentlichen Richtungsänderungen im vorderen Bereich, insbesondere im Bereich des Bohrkopfes stattfinden. Daher wird ein Winkel bevorzugt im vorderen Bereich der Rohrelemente gemessen.

Dem Fachmann ist jedoch klar, dass der Winkel auch zwischen dem zweiten und dritten Rohrelement gemessen werden kann. Prinzipiell kann der Winkel auch zwischen dem Bohrkörper und dem ersten Rohrelement gemessen werden.

Vorzugsweise wird eine Exzentrizität einer Kraft in Abhängigkeit eines Richtungswinkels ermittelt. Wie bereits oben beschrieben ist die Exzentrizität der Kraft massgebend für die Stabilität der Rohrelemente. Je grösser die Exzentrizitätsänderung der Kraft über ein Rohr bei konstanter Vorschubkraft, desto grösser ist die Gefahr einer Beschädigung eines Rohrelements. Die Bestimmung der Exzentrizität der Kraft ermöglicht damit eine Beurteilung über die Bruchgefahr bei den Rohrelementen.

In Varianten kann auf die Ermittlung der Exzentrizität auch verzichtet werden.

Wie bereits oben erwähnt, finden typischerweise die relevanten Richtungsänderungen in den in Vorschubrichtung vorderen Rohrelementen statt. Damit wird vorzugsweise auch die Exzentrizität der Kraft bezüglich einer Vorschubrichtung in einem vordersten Rohrelement bestimmt.

In Varianten kann die Exzentrizität auch an hinteren Rohrelementen oder direkt beim Bohrkopf bestimmt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: schematisch die Elemente des Systems und das Verfahren zum Erstellen einer unterirdischen Rohrleitung durch Pressvortrieb als Schnittdarstellung entlang einer Ebene rechtwinklig zur Vortriebsrichtung;
- Fig. 2: eine Detailansicht gemäss Figur 1 umfassend zwei Rohrelemente mit zwischenliegender hydraulischen Fuge;
- Fig. 3: eine schematische Schnittdarstellung entlang der Vortriebsrichtung gemäss Figur 1;
- Fig. 4: ein Diagramm zur schematischen Darstellung der Abhängigkeit zwischen Fugenwinl<eländerung und Vortriebskraft;
- Fig. 5: ein Diagramm zur schematischen Darstellung der Abhängigkeit zwischen Weg und Kraft bei der Vortriebspresse 3;
- Fig. 6: eine Darstellung eines kritischen Winkelbereichs, innerhalb welcher ohne Reduktion der Vortriebskraft operiert werden kann;
- Fig. 7: eine schematische Darstellung eines Verfahrens zur Messsignalauswertung;
- Fig. 8: eine schematische Darstellung einer Messsignalauswertevorrichtung; sowie
- Fig. 9: eine schematische Darstellung einer Planlinie mit überlagerter effektiver Steuerungslinie der Bohrvorrichtung.

Grundsätzlich sind in den Figuren gleiche Teile mit gleichen Bezugszeichen versehen.

### Wege zur Ausführung der Erfindung

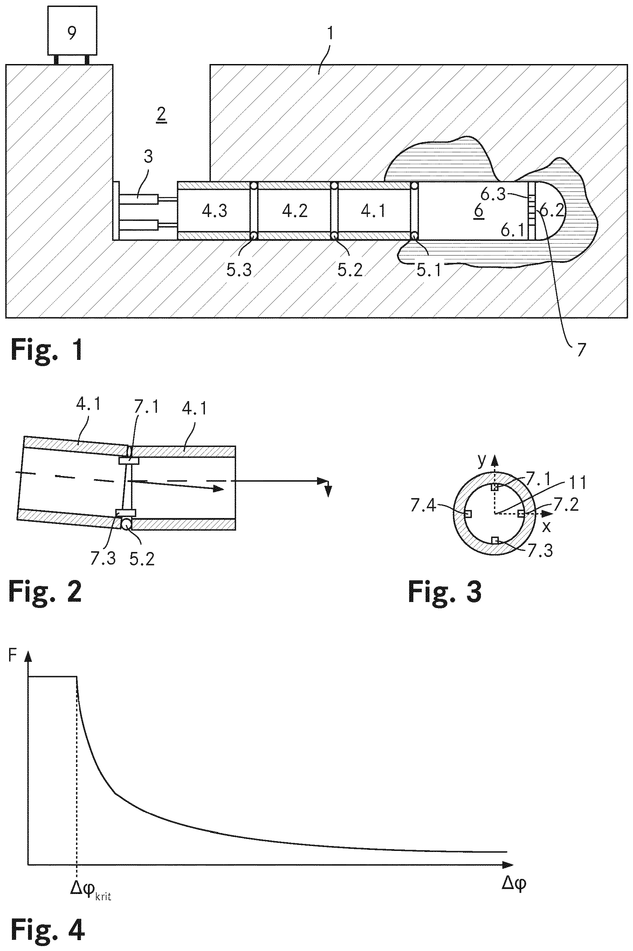

Fig. 1 zeigt schematisch die Elemente des Systems und das Verfahren zum Erstellen einer unterirdischen Rohrleitung durch Pressvortrieb. In einem Schacht 2 des Untergrunds 1 ist eine z.B. hydraulische Vortriebspresse 3 verankert. Sie dient dazu, eine Reihe von Rohrelementen 4.1, 4.2, 4.3 und die am vorderen Ende der Reihe von Rohrelementen angeordnete Tunnelbohrmaschine 6 vorwärts zu schieben. Zwischen den Rohrelementen 4.1, 4.2 bzw. 4.2, 4.3 ist jeweils eine hydraulische Fuge 5.1 bzw. 5.2 vorgesehen.

Die Tunnelbohrmaschine 6 hat typischerweise einen Maschinenkörper 6.1 und einen Bohrkopf 6.2. Der Bohrkopf 6.2 ist verstellbar in der Ausrichtung durch einen geeigneten Antrieb 6.3 (z.B durch Hydraulikzylinder). Auf diese Weise kann die Tunnelbohrmaschine 6 in die gewünschte Richtung gelenkt werden, um entlang einer vorgegebenen Planungslinie zu arbeiten. Zwischen dem Bohrkopfs 6.2 und dem Maschinenkörper 6.1 der Bohrvorrichtung 6 ist eine Winkelsensor 7, zum Beispiel ein oder mehrere Wegsensoren oder Positionssensoren vorgesehen, womit ein Winkel zwischen dem Bohrkopfs 6.2 und dem Maschinenkörper 6.1 bestimmt werden kann.

Der Pressvortrieb läuft im Wesentlichen wie folgt ab:
Nachdem die Tunnelbohrmaschine 6 und die Vortriebspresse 3 im Schacht 2 in Position gebracht sind, wird die Tunnelbohrmaschine 6 durch die Vortriebspresse 3 um eine vorgegebene Rohrlänge L vorgetrieben. Der Aushub, den der Bohrkopf erzeugt, wird fortlaufend entfernt.

Nach dem ersten Hub der Vortriebspresse 3 wird diese um die Rohrlänge L zurück gefahren und ein erstes Rohrelement 4.1 wird zwischen die Presse und die Tunnelbohrmaschine gesetzt. An beiden Enden des Rohrelements 4.1 wird eine hydraulische Fuge platziert.

Als nächstes wird die Vortriebspresse 3 am hinteren Ende des ersten Rohrelements 4.1 angesetzt und es wird das Rohrelement 4.1 zusammen mit der Tunnelbohrmaschine 6 um eine Rohrlänge L vorgetrieben.

Erneut wird die Vortriebspresse 3 zurückgezogen. Zwischen die Vortriebspresse 3 und das Rohrelement 4.1 wird ein weiteres Rohrelement 4.2 gesetzt, das am hinteren Ende ebenfalls mit einer hydraulischen Fuge 5.2 versehen ist. Zwischen dem ersten und dem zweiten Rohrelement 4.1, 4.2 befindet sich jetzt die hydraulische Fuge 5.1. An dieser Fuge 5.1 können nun Winkelsensoren angebracht werden, damit beim weiteren Pressvortrieb der tatsächliche Winkel zwischen den beiden Rohrelementen 4.1, 4.2 überwacht werden kann. Als Winkelsensoren können z.B. Positionssensoren dienen.

Als nächstes wird erneut ein Vortrieb um die Rohrlänge L erzeugt und ein weiteres Rohrelemente 4.3 eingesetzt. Zwischen den beiden aufeinander folgenden Rohrelementen 4.2 und 4.3 befindet sich die hydraulische Fuge 5.2. Bei jedem Hub der Vortriebspresse 3 werden somit alle aufeinander folgenden Rohrelemente und die Tunnelbohrmaschine gemeinsam, das heisst synchron, vorgetrieben. Dabei braucht es nicht an jeder Fuge Winkelsensoren. In der Praxis werden nur in beispielsweise jeder dritten oder beispielsweise in jeder fünften Fuge Winkelsensoren angebracht.

Der Winkelsensor 7 ist Teil eines Messsystems zum Überwachen und Steuern der Vortriebsrichtung der Tunnelbohrmaschine 6 und der Presskraft der Vortriebspresse 3. Fig. 2 veranschaulicht die hydraulische Fuge 5.2. Gemäss einer bevorzugten Ausführungsform ist eine solche hydraulische Fuge durch einen armierten Schlauch gebildet, der zwischen den Stirnseiten der typischerweise kreiszylindrischen Rohrelemente 4.1, 4.2 verläuft. Der Schlauch verläuft auf der Stirnseite entweder spiralförmig oder ringförmig. Er ist mit Wasser gefüllt (vgl. EP 1 727 964 B1, Trümpi) und kann unter Krafteinwirkung in einem gewissen Ausmass im Querschnitt verformt werden. Dadurch kann er sich der Grösse des Spalts anpassen, der zwischen den aufeinanderfolgenden Rohrelementen 4.1, 4.2 vorhanden ist. Der Schlauch überträgt die Presskraft zwischen den aufeinanderfolgenden Rohrelementen 4.1, 4.2. Zudem dichtet er den Spalt, der zwischen den Stirnseiten der Rohrelemente 4.1, 4.2 besteht.

Gemäss Fig. 3 sind z.B. pro Fuge 5.1 vier Winkelsensoren 7.1, ..., 7.4 vorgesehen, welche bezüglich der Rohrachse 11 drehsymmetrisch angeordnet sind. So lässt sich der Winkel zwischen den beiden aufeinanderfolgenden Rohrelementen 4.1 und 4.2 messen.

In der Darstellung gemäss Fig. 2 sind die beiden Rohrelemente 4.1, 4.2 nicht koaxial ausgerichtet, sondern sie stehen in einem gewissen Winkel phi zueinander, welcher mit den Winkelsensoren 7.1,...,7.4 gemessen wird. Dieser Winkel ist massgeblich dafür, mit welcher Kraft das hintere Rohrelement 4.2 vorwärts getrieben werden darf. Wenn nämlich die Rohrelemente in einem gewissen Winkel phi >0 zueinander stehen, führt das zu einer exzentrischen Lage der Vortriebskraft. Da die Rohrelemente bei ausgeprägter exzentrischer Belastung weniger belastbar sind als bei konzentrischer Belastung, muss ab einer gewissen Exzentrizität die Vortriebskraft reduziert werden, um eine Überlastung bzw. ein Bruch des Rohrelements während des Pressvortriebs zu vermeiden.

Im Verfahren wird ein Differenzwinkel delta-phi zwischen einem aktuellen und einem zuvor ermittelten Winkel ermittelt.

Fig. 4 zeigt schematisch die Abhängigkeit zwischen der Änderungsrate des Fugenwinl<els delta phi (Exzentritziät E der Vortriebskraft) über ein Rohrelement einerseits und zulässiger Vortriebskraft F. In einem Winkelbereich 0 ≤ delta phi ≤ delta phi_krit kann die maximale Vortriebspressl<raft angewendet werden. Beim überschreiten des kritischen Wertes delta-phi_krit fällt die zulässige Vortriebspressl<raft F stark ab. Dabei hängt der Wert delta-phi_krit von der radialen Richtung bezüglich der Rohrelement-Achse ab. In horizontaler Richtung ist er in der Regel grösser als in vertikaler Richtung.

Der Bohrkopf sollte möglichst genau entlang der Planungslinie für die Rohrleitung geführt werden. Allerdings kann es in der Praxis verschiedene Gründe geben, weshalb dies nur annäherungsweise möglich ist.

Setzt sich die Planungslinie z.B. aus einer Geraden und einem Kreisbogen zusammen, so kann es sein, dass die Richtungsänderung von der Geraden zum Kreisbogen so stark ist, dass die Vortriebspressl<raft reduziert werden muss, falls der Planungslinie genau gefolgt würde. In einem solchen Fall kann es vorteilhaft sein, die Richtungsänderung auf mehrere Hübe der Pressvorrichtung aufzuteilen und damit auf Orte.

Weiter wird es unvermeidlich sein, dass die Tunnelbohrmaschine aufgrund der sich ändernden Bodenbeschaffenheit, des Bodendrucl<s etc. von der gewünschten Planungslinie abkommt. Infolgedessen wird beim nächsten Schritt eine Korrektur in der Richtung des Bohrkopfs nötig sein, damit die effektive Rohrleitungslinie sich nicht weiter von der Planungslinie entfernt.

Häufig wird die Tunnelbohrmaschine in dem Sinn manuell gesteuert, dass ein Bohrmeister nach jedem Hub des Pressvortriebs die Ausrichtung des Bohrkopfs vorgeben muss. Er kann die Richtung des Bohrkopfs unverändert lassen oder in einem gewissen Ausmass ändern. Bei gewissen bekannten Verfahren war es seiner Erfahrung überlassen, wie er bei einer Abweichung von der Planungslinie am besten vorgeht. Korrigiert er zu stark, wird der Fugenwinl<el zu gross und die Vortriebskraft muss reduziert werden. Die Reduktion der Vortriebskraft kann zu einem langsameren Vorschub der Rohrleitung führen. Möglich ist es auch, dass die Rohrleitung weniger weit vorgetrieben werden kann, oder dass eine vorgesehene Zwischenpresse früher aktiviert werden muss. Die Verwendung von Zwischenpressen reduziert ebenfalls die maximal mögliche Vortriebsleistung des Systems.

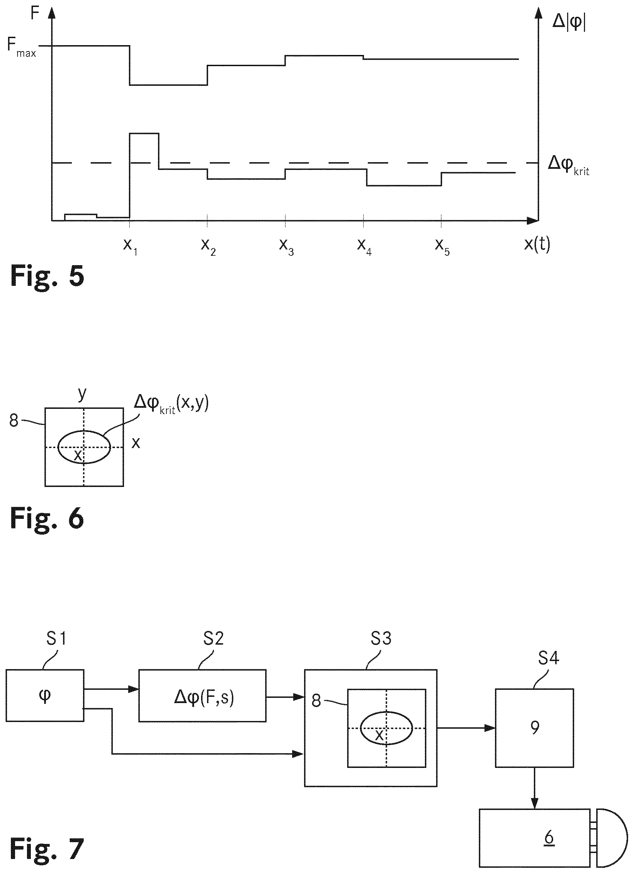

Fig. 5 veranschaulicht die Bedeutung der Steuerung der Richtung der Tunnelbohrmaschine. Auf der Abszisse ist der Weg (entlang der Rohrleitung) und auf der Ordinate die Kraft F der Vortriebspresse 3 dargestellt.

Im dargestellten Beispiel folgt die Bohrmaschine zunächst relativ gut der Planungslinie und es sind nur geringe Korrekturen mit delta phi < delta phi_krit. erfolgt. An der Stelle x1 wurde aber aus gewissen Gründen eine starke Richtungskorrektur vorgenommen und der Winkel in der ersten hydraulischen Fuge hat den kritischen Winkel delta-phi_krit überschritten. Um das Risiko eines Bruchs des an die Fuge anschliessenden Rohrelements zu vermeiden, wurde die Vortriebskraft F unter die Maximalkraft F_max reduziert. Erst als die Rohrleitung mit der hydraulischen Fuge am Ort x2 angekommen war, konnte die reduzierte Vortriebskraft angehoben werden. Gemäss dem Beispiel von Fig. 5 war die Wirkung der starken Richtungsänderung bei x1 derart abgeschwächt, dass wieder mit der maximalen Vortriebskraft gearbeitet werden konnte. Bei allen weiteren Richtungsänderungen an den Stellen x4 und x5 blieb die Winkelkorrektur unter dem kritischen Winl<eländerungsbereich delta-phi_I<rit, so dass mit der maximalen Vortriebskraft gearbeitet werden kann.

Die Fig. 5 veranschaulicht die Überwachung des Fugenwinl<els entlang der Rohrleitung. Während aus der EP 1 727 964 B1 (Trümpi) bekannt ist, dass die hydraulischen Fugen überwacht werden und dass ein Alarm ausgelöst wird, wenn an einer Stelle entlang der Rohrleitung die ausgeübte Kraft grösser ist als die zulässige Kraft, so wird der Bohrmeister aber in keiner Weise unterstützt, eine solche Situation der Überlastung zu vermeiden. Hier schafft die vorliegende Erfindung Abhilfe.

Erfindungsgemäss wird nämlich an jeder Stelle x_i (bzw. zu jedem Zeitpunkt t_i), an welcher (bzw. an welchem) eine Änderung der Richtung des Bohrkopfs möglich oder zumindest empfehlenswert ist, auch der Winkelbereich ausgegeben, innerhalb dessen die Vortriebsrichtung geändert werden kann, ohne dass die maximale Vortriebskraft reduziert werden muss.

Fig. 6 veranschaulicht eine bevorzugte Ausführungsform für die Ausgabe des kritischen Winl<eländerungsbereichs delta-phi_I<rit. Auf einem Bildschirm 8 wird eine x-y-Grafik gezeigt, in welcher der Winkel des Bohrkopfs 6.2 mit einem Kreuz oder einem Punkt visualisiert ist, wobei der Nullpunkt auf der Exzentrizität der Vorschubraft liegt. Ferner zeigt der Bildschirm den Winl<eländerungsbereich an, innerhalb dessen eine neue Winkeländerung liegen soll, wenn eine Reduktion der Maximalkraft vermieden werden soll. Der genannte kritische Winl<eländerungsbereichbereich delta-phi_I<rit(x,y) wird im allgemeinen eine Ellipsenform haben.

Mit einem Blick auf den Bildschirm 8 kann der Bohrmeister nun eine nötige Richtungsänderung so festlegen, dass sie innerhalb des kritischen Winl<eländerungsbereichs delta-phi_krit(x,y) ist. Jeder Punkt innerhalb des kritischen Winkelbereichs entspricht einer Winkeländerung, die optimal ist. Der Bohrmeister kann also vorausschauend vermeiden, dass er die Vortriebskraft unter die maximale Kraft reduzieren muss.

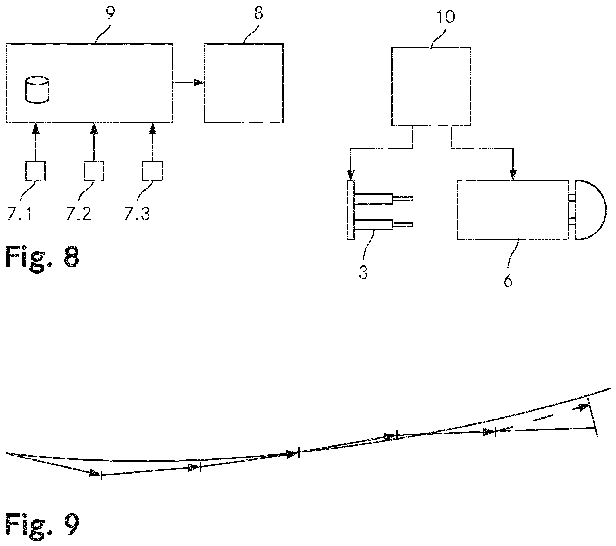

Fig. 7 und Fig. 8 veranschaulicht das Steuerverfahren für den Bohrkopf und die Messsignalauswertevorrichtung.

Im Schritt S1 wird der Bohrl<opfwinl<el phi(x) an einer bestimmten Position x (entlang der effektiven Linie des Tunnelvortriebs) ermittelt. Dazu hat die Messsignalauswertungsvorrichtung mindestens einen Winkelsensor 7, welcher bevorzugt als Positionssensor ausgebildet ist. Winkelsensoren können aber auch zwischen Rohrelementen vorgesehen sein.

Im nächsten Schritt S2 wird der kritische Winl<eländerungsbereich delta phi_krit(x) des Bohrkopfs 6.2 berechnet. Dieser hängt von der Grösse und Exzentrizität der effektiv auf das Rohrelement am Ort x wirkenden Vortriebskraft F ab. Die zulässige Kraft hängt nicht nur von der Statik des Rohrelements (Wandstärke, Armierung) ab, sondern auch von der Beschaffenheit des Untergrunds (Sand, Lehm, Geröll, Fels etc.) am Ort x. Schliesslich spielt auch die Distanz zur Vortriebspresse eine Rolle, da die maximale Vortriebskraft mit zunehmender Länge der Rohrleitung abgebaut wird. Diese Einflussfaktoren werden vorzugsweise berücksichtigt.

Die Berechnungen laufen in einem Rechner 9 ab, auf dem ein entsprechendes Programm (Software) geladen ist. Der Rechner 9 kann auch auf abgespeicherte Statil<daten der Rohrelemente und bei Bedarf auf Reibungsdaten des Untergrunds zugreifen.

Im Schritt S3 werden die Winkeländerung delta phi des Bohrkopfs 6.2, das heisst der Steuerwinkel und der kritische Winl<eländerungsbereich delta-phi_I<rit(x,y) auf dem Bildschirm 8 ausgegeben.

Im Schritt S4 wird ein Winkel für die Bohrmaschine eingegeben, den der Bohrmeister beispielsweise aufgrund der Planungslinie und des angezeigten kritischen Winkelbereichs ermittelt hat. Dabei kann auch eine bekannte Drift des Bohrkopfs berücksichtigt werden. Die Tunnelbohrmaschine wird nämlich nicht zwingend in die Richtung gehen, in die der Bohrkopf eingestellt wird. Beispielsweise hat die Tunnelbohrmaschine in weichem Untergrund die Tendenz abzusinken.

Der Schritt S4 kann manuell erfolgen. Gemäss einer bevorzugten Ausführungsform kann die Richtungsvorgabe aber auch mit einem elektronischen Regler eingestellt werden, welcher insbesondere durch den Maximall<raft-Differenzwinl<elbereich derart überlagert ist, dass eine Stellsignalbegrenzung innerhalb des Maximall<raft-Differenzwinl<elbereichs erreicht ist. Wenn die Messsignalauswertung ein eigenständiger Gerätesatz ist, dann wird der Schritt S4 durch eine Eingabe am Pult der Steuerung 10 der Tunnelbohrmaschine 6 erfolgen. Von diesem Pult aus kann auch die Vortriebskraft der Vortriebspresse 3 eingestellt werden. Zwar ist es das Ziel einer guten Steuerung des Systems, dass immer mit der maximalen Vortriebskraft gefahren werden kann. Es kann aber durchaus auch nötig werden, die Vortriebskraft reduzieren zu können.

In einer weiteren bevorzugten Ausführungsform wird eine Materialbeschaffenheit des Untergrundes in die Messsignalauswertung einbezogen. Bekanntermassen kann sich der Bohrkopf in weichem Grund vertikal absenken, womit eine Abweichung in vertikaler Richtung von der Planlinie erfolgen kann. Solche Abweichungen sind fortwährend zu korrigieren. Durch eine Analyse des Abtragungsmaterials, entweder vor Ort am Bohrkopf, zum Beispiel mit Sensoren oder Kamera, kann frühzeitig auf eine Änderung der Bodenbeschaffenheit reagiert werden. Insbesondere bei weichem Untergrund kann damit der Bohrkopf mit einem Driftwinkel versehen werden, so dass dieser zum Erreichen einer horizontalen Bohrung in einem entsprechenden Vertikalwinkel nach oben gerichtet ist (sog. Höhenwinkel). Je geringer die Festigkeit des Untergrundes ist, desto grösser ist ein solcher Vertikalwinkel zu wählen.

Die Figur 9 zeigt schliesslich eine schematische Darstellung einer Planlinie mit überlagerter effektiver Steuerungslinie der Bohrvorrichtung. Die Planlinie ist durch die durchgehende Linie dargestellt, während die effektive Steuerungslinie durch eine Pfeill<ette dargestellt ist.

Zusammenfassend ist festzustellen, dass durch die Erfindung ein Verfahren zur Messsignalauswertung geschaffen wird, womit in effizienter und präziser Weise eine Rohrvorschubvorrichtung betrieben werden kann, wobei insbesondere eine Risiko einer Beschädigung eines Rohrelements minimiert werden kann.

## Patentansprüche

1. Messsignalauswertungsverfahren in einem Rohrvortriebsverfahren wobei mit dem Rohrvortriebsverfahren eine Rohrleitung entlang einer Planungslinie durch gleichzeitiges Vorschieben von mindestens zwei Rohrelementen (4.1, 4.2), welche eine vorgegebene statische Rohrbelastungsgrenze haben, in einem Untergrund erstellt wird,
wobei das Messsignalauswertungsverfahren folgende Schritte umfasst:
a) messen eines Richtungswinkels des Rohrvortriebs mit einem Winkelsensor (7.1), wobei der Richtungswinkel des Bohrkopfs (6.2) gegenüber einem Maschinenkörper (6.1) einer Bohrvorrichtung (6) sowie insbesondere ein Richtungswinkel bei der hydraulischen Fuge zwischen einem in einer Vorschubrichtung vordersten (4.1) und zweitvordersten Rohrelement (4.2) als Richtungswinkel des Bohrvortriebs gemessen wird
b) ausgeben des gemessenen Richtungswinkels,
**gekennzeichnet durch den Schritt**
c) berechnen und ausgeben eines aktuellen, vom Richtungswinkel abhängigen Maximall<raft-Differenzwinl<elbereichs, in welchem ein Winkel der beiden vordersten der mindestens zwei Rohrelementen (4.1, 4.2) geändert werden kann, ohne dass eine maximale Vorschubkraft reduziert werden muss, der zumindest aufgrunc des aktuellen, gemessenen Richtungswinkels und der statischen Rohrbelastungsgrenze berechnet ist.

2. Steuerverfahren für ein Rohrvortriebsverfahren, unter Verwendung eines Messsignalauswertungsverfahrens nach Anspruch 1, **dadurch gekennzeichnet, dass** ein Bohrkopf (6.2) derart gesteuert wird, dass der Richtungswinkel innerhalb des Maximall<raft-Differenzwinl<elbereichs liegt.

3. Steuerverfahren nach Anspruch 2, **dadurch gekennzeichnet, dass** der Maximalkraft-Differenzwinl<elbereich graphisch, insbesondere auf einem Bildschirm (8), vorzugsweise in Echtzeit, dargestellt wird.

4. Rohrvortriebsverfahren unter Verwendung eines Steuerverfahrens nach Anspruch 2.

5. Computerprogrammprodukt umfassend ein Computerprogramm zur Durchführung eines Verfahrens nach Anspruch 1.

6. Messeinrichtung umfassend einen Winl<elsensor (7.1) zum Messen eines Winkels eines Bohrkopfs (6.2) gegenüber einem Maschinenkörper (6.1) einer Bohrvorrichtung (6), sowie insbesondere zwischen zwei Rohrelementen (4.1, 4.2) und zum Ausgeben von Winkeldaten, eine Datenverarbeitungseinheit (9) zum Verarbeiten der Winl<eldaten sowie einem Computerprogramm zur Durchführung eines Messsignalauswertungsverfahrens nach Anspruch 1, wobei das Computerprogramm anhand der gemessenen Winkeldaten des einen Winkelsensors (7.1) den Maximalkraft-Differenzwinkelbereich berechnet.

7. Pressvortriebseinrichtung zur Durchführung eines Verfahrens nach Anspruch 1, umfassend eine Messeinrichtung nach Anspruch 6, sowie eine Presse (3) zum Vortreiben zweier Rohrelemente (4.1, 4.2) und einer Bohrvorrichtung (6) mit einem Bohrkopf (6.2) und einem Maschinenkörper (6.1), wobei der Winkelsensor (7.1) zwischen dem Bohrkopf (6.2) und dem Maschinenkörper (6.1) angeordnet ist,.

8. Pressvortriebseinrichtung nach Anspruch 7 umfassend ein Ausgabemittel zur Darstellung des Maximall<raft-Differenzwinl<elbereichs, vorzugsweise in Echtzeit, insbesondere einen Bildschirm (8).

## Claims

1. Method for measurement signal evaluation in a pipe jacking method, wherein the pipe jacking method is used to construct a pipeline along a planning line by simultaneously advancing at least two pipe elements (4.1, 4.2), which have a predetermined static pipe load limit, in a subsurface,
wherein the method for measurement signal evaluation comprises the following steps:
a) measuring of a direction angle of the pipe jacking with an angle sensor (7.1), wherein the directional angle of a drill head (6.2) relative to a machine body (6.1) of a drilling device (6) and, in particular, a directional angle in the hydraulic joint between a foremost (4.1) and second foremost pipe element (4.2) in a feed direction is measured as the directional angle of the pipe jacking
b) output of the measured direction angle,
**characterised by the step**
c) calculating and outputting a current maximum force difference angle range dependent on the direction angle, in which an angle of the two foremost of the at least two tube elements (4.1, 4.2) can be altered without having to reduce a maximum jacking force, which is calculated at least on the basis of the current measured direction angle and the static pipe load limit.

2. Method for controlling a pipe jacking method, using a method for measurement signal evaluation according to claim 1, **characterised in that** a drill head (6.2) is controlled in such a way that the direction angle lies within the maximum force difference angle range.

3. Method for controlling a pipe jacking method according to claim 2, **characterised in that** the maximum force difference angle range is displayed graphically, in particular on a screen (8), preferably in real time.

4. Pipe jacking method using a control method according to claim 2.

5. A computer program product comprising a computer program for carrying out a method according to claim 1.

6. Measuring device comprising an angle sensor (7.1) for measuring an angle of a drill head (6.2) relative to a machine body (6.1) of a drilling device (6), and in particular between two pipe elements (4.1, 4.2) and for outputting angular data, a data processing unit (9) for processing the angular data and a computer program for carrying out a method for measurement signal evaluation according to claim 1, wherein the computer program calculates the maximum force difference angle range on the basis of the measured angular data of the one angular sensor (7.1).

7. A jacking device for carrying out a method according to claim 1, comprising a measuring device according to claim 6, as well as a press (3) for jacking two pipe elements (4.1, 4.2) and a drilling device (6) with a drill head (6.2) and a machine body (6.1), wherein the angle sensor (7.1) is arranged between the drill head (6.2) and the machine body (6.1).

8. A jacking device according to claim 7 comprising an output means for displaying the maximum force difference angle range, preferably in real time, in particular a screen (8).

## Revendications

1. Procédé d'évaluation de signaux de mesure dans un procédé de fonçage de tubes, par le procédé de fonçage de tubes, une canalisation étant créée dans un sous-sol, le long d'une ligne de planification en faisant avancer au moins deux éléments tubulaires (4.1, 4.2), lesquels présentent une limite prédéfinie de déformation statique des tubes, le procédé d'évaluation de signaux de mesure comprenant les étapes suivantes, consistant à :
a) mesurer un angle directionnel du fonçage de tubes à l'aide d'un détecteur angulaire (7.1), l'angle directionnel de la tête de forage (6.2) par rapport à un corps de machine (6.1) d'un dispositif de forage (6), ainsi que notamment un angle directionnel près d'un joint hydraulique entre un élément tubulaire de tête (4.1) et le deuxième de tête (4.2) étant mesuré en tant qu'angle directionnel du fonçage par forage,
b) éditer l'angle directionnel mesuré,
**caractérisé par** l'étape consistant à
c) calculer et éditer une plage d'angle différentiel de la force maximale actuelle, dépendant de l'angle directionnel dans laquelle un angle des au moins deux éléments tubulaires (4.1, 4.2) de tête et deuxième de tête peut être modifié sans qu'il ne soit nécessaire de réduire une force d'avance maximale, qui est calculée au moins sur la base de l'angle directionnel actuel mesuré et de la limite de déformation statique des tubes.

2. Procédé de commande pour un procédé de fonçage de tubes, en utilisant un procédé d'évaluation de signaux de mesures selon la revendication 1, **caractérisé en ce que** l'on commande une tête de forage (6.2) de telle sorte que l'angle directionnel se situe dans la plage d'angle différentiel de la force maximale.

3. Procédé de commande selon la revendication 2, **caractérisé en ce que** l'on représente graphiquement, notamment sur un écran (8) la plage d'angle différentiel de la force maximale, de préférence en temps réel.

4. Procédé de fonçage de tubes en utilisant un procédé de commande selon la revendication 2.

5. Produit de programme informatique, comprenant un programme informatique, destiné à réaliser un procédé selon la revendication 1.

6. Système de mesure, comprenant un détecteur angulaire (7.1), destiné à mesurer un angle d'une tête de forage (6.2) par rapport à un corps de machine (6.1) d'un dispositif de forage (6), ainsi que notamment entre deux éléments tubulaires (4.1, 4.2) et à éditer des données angulaires, une unité de traitement de données (9), destinée à traiter les données angulaires, ainsi qu'un programme informatique, destiné à réaliser un procédé d'évaluation de signaux de mesures selon la revendication 1, le programme informatique calculant à l'aide des données angulaires mesurées de l'un détecteur angulaire (7.1) la plage d'angle différentiel de la force maximale.

7. Système de fonçage par poussée, destiné à réaliser un procédé selon la revendication 1, comprenant un système de mesure selon la revendication 6, ainsi qu'une presse (3), destinée à foncer deux éléments tubulaires (4.1, 4.2) et un dispositif de forage (6) pourvu d'une tête de forage (6.2) et d'un corps de machine (6.1), le détecteur angulaire (7.1) étant placé entre la tête de forage (6.2) et le corps de machine (6.1).

8. Système de fonçage par poussée selon la revendication 7, comprenant un moyen d'édition, destiné à représenter la plage d'angle différentiel de la force maximale, de préférence en temps réel, notamment un écran (8).
